# EUROPÄISCHE PATENTANMELDUNG

(11) **EP 4 557 542 A1**
(43) Veröffentlichungstag der Anmeldung: **21.05.2025**
(21) Anmeldenummer: 24202857.9
(22) Anmeldetag: 26.09.2024
(51) Int. Cl.: H02G 3/12

(54) **BEFESTIGUNGSHÜLSE**

(30) Priorität: 14.11.2023 DE 202023106677 U
(71) Anmelder: f-tronic GmbH, 66131 Saarbrücken (DE)
(72) Erfinder: Fohs, Peter, 66399 Mandelbachtal (DE)
(74) Vertreter: Keil & Schaafhausen Patentanwälte PartGmbB

(57) **Zusammenfassung**

Die Erfindung betrifft eine Befestigungshülse (1) zum Einschrauben in eine Wand, insbesondere in eine Dämmschicht, sowie zur Aufnahme einer Installationsdose (100) für eine Elektroinstallation, wobei die Befestigungshülse (1) einen hohlzylindrischen Wandabschnitt (2), der durch eine Wandung gebildet wird, und einen Kragenabschnitt (20), der sich an einem ersten Ende (5) des Wandabschnitts (2) radial nach außen erstreckt, aufweist. Die erfindungsgemäße Befestigungshülse ist dadurch gekennzeichnet, dass auf einer Außenfläche (3) des Wandabschnitts (2) zumindest bereichsweise eine gewindeähnliche Profilierung (7) vorgesehen ist.

## Beschreibung

Die vorliegende Erfindung betrifft eine Befestigungshülse zum Einschrauben in eine Wand, insbesondere in eine Dämmschicht, sowie zur Aufnahme einer Installationsdose für eine Elektroinstallation.

Die Befestigungshülse weist einen hohlzylindrischen Wandabschnitt, der durch eine Wandung gebildet wird, sowie einen Kragenabschnitt, der sich an einem ersten Ende des Wandabschnitts radial nach außen erstreckt, auf.

Aus dem Stand der Technik sind Lösungen bekannt, die es ermöglichen, Installationsdosen in einer Dämmschicht einer Wand, wie zum Beispiel der Fassadendämmung einer Hauswand, zu befestigen. So offenbart CH 702 238 B1 einen Teleskop-Halter für Elektroinstallationen bestehend aus einer an der Hauswand befestigten Basisplatte, einem sich in die Dämmschicht erstreckenden Teleskoparm und einer an dem der Hauswand abgewandten Ende des Teleskoparms befestigten Installationsdose, die aus der Dämmschicht herausragt. Außerdem ist aus der DE 10 2011 054 037 B4 ein Formelement aus thermischem Isolationsmaterial bekannt, das eine integrierte Installationsdose aufweist.

Nachteilig bei den aus dem Stand der Technik bekannten Befestigungsvorrichtungen ist, dass diese vor dem großflächigen Anbringen der Dämmung an die darunterliegende Wand angebracht werden müssen. Bei dem nachfolgenden Aufbringen der Dämmung besteht die Gefahr der Beschädigung der jeweiligen Befestigungsvorrichtung. Des Weiteren umfassen die bekannten Befestigungsvorrichtungen integrierte Installationsdosen. Es ist daher nicht möglich, eine freie Auswahl der verwendeten Installationsdose zu treffen oder die Installationsdose gesondert auszutauschen.

Der vorliegenden Erfindung liegt daher die Aufgabe zu Grunde, eine Befestigungshülse vorzuschlagen, die in einfacher Weise nachträglich in eine Wand, insbesondere in die Dämmschicht einer Wand, eingebracht werden kann und ein großes Maß an Flexibilität in der Auswahl der gewünschten Installationsdose bietet.

Diese Aufgabe wird durch die Befestigungshülse mit den Merkmalen des Anspruchs 1 gelöst. Bevorzugte Ausführungsformen der Erfindung sind aus den abhängigen Ansprüchen ersichtlich. Erfindungsgemäß ist dazu auf einer Außenfläche des Wandabschnitts zumindest bereichsweise eine gewindeähnliche Profilierung vorgesehen.

Vorteilhaft wird dadurch erreicht, dass die Befestigungshülse durch Eindrehen in eine Wand sicher in dieser befestigt werden kann. Die Befestigungshülse kann dazu beispielsweise in eine Öffnung einer Wand, insbesondere einer Dämmschicht einer Wand, eingedreht werden. Dabei erfolgt das Eindrehen durch Rotation der Befestigungshülse um die Längsachse der hohlzylindrischen Wandung. Im eingedrehten Zustand liegt der Kragenabschnitt auf der Außenfläche der Dämmung auf und bildet einen Endanschlag für die Rotation der Befestigungshülse. Da die gewindeähnliche Profilierung durch das Eindrehen in Eingriff mit dem Material der Wand kommt, wird sichergestellt, dass die Befestigungshülse in der Öffnung fixiert wird und gegen ein Herausziehen gesichert wird, das heißt große Auszugskräfte erreicht werden. Vorzugweise umläuft die gewindeähnliche Profilierung die Außenfläche des Wandabschnitts spiralförmig. Weiterhin vorzugsweise weist die Wandung einen Außendurchmesser von 60 bis 80 mm, besonders bevorzugt 70 bis 80 mm und überaus bevorzugt 74 mm auf.

Ein weiterer Vorteil besteht darin, dass die Befestigungshülse die Aufnahme einer Installationsdose für die Elektroinstallation ermöglicht. Eine Installationsdose kann dazu in die zylindrische Öffnung des hohlzylindrischen Wandabschnitts eingeschoben werden. Zu diesem Zweck kann eine Installationsdose von dem kragenseitigen Ende der Befestigungshülse in Richtung des hohlzylindrischen Wandabschnitts in diesen eingeschoben werden. Das Einschieben kann beispielsweise vor dem Eindrehen der Befestigungshülse in die Wand oder nach dem Eindrehen der Befestigungshülse in der Wand durchgeführt werden. Eine eingeschobene Installationsdose kann mit der Befestigungshülse verbunden werden, um ein herausrutschen zu verhindern. Dazu kann vorzugsweise das dem Kragenabschnitt abgewandte Ende der Wandung dazu eingerichtet sein, mit Rastelementen einer Installationsdose zu koppeln und so eine eingeschobene Installationsdose vor einem Herausrutschen zu sichern. Vorzugsweise weist der hohlzylindrische Wandabschnitt der Befestigungshülse einen Innendurchmesser von 60 bis 80 mm, besonders bevorzugt 65 bis 70 mm und überaus bevorzugt 68 mm auf. Dadurch wird ermöglicht, dass handelsübliche Installationsdosen in die Befestigungshülse aufgenommen werden können.

Die Befestigungshülse kann beispielsweise insgesamt aus einem Kunststoff bestehen. In diesem Fall kann die Befestigungshülse in einem einheitlichen Kunststoff-Spritzvorgang hergestellt werden.

In einer bevorzugten Ausführungsform wird die gewindeähnliche Profilierung durch eine von der Außenfläche des Wandabschnitts vorstehende Rippe gebildet. Durch ein solches durch die Rippe gebildetes Außengewinde lassen sich vorteilhaft die Auszugskräfte der Befestigungshülse aus einer Wand, insbesondere einer Dämmschicht einer Wand, erhöhen. Vorzugsweise erstreckt sich die Rippe von der Außenfläche des Wandabschnitts der Befestigungshülse in radialer Richtung nach außen. Dabei wird in vorteilhafter Weise die Eindringtiefe der Rippe in die Wand erhöht und somit der Halt in der Wand weiter gesteigert. Gemäß einer bevorzugten Ausführungsform verjüngt sich die Rippe ausgehend von der Außenfläche des Wandabschnitts. Eine derart ausgeformte Rippe ermöglicht ein erleichtertes Einschneiden der Rippe in die Wand und senkt somit den benötigten Kraftaufwand beim Eindrehen der Befestigungshülse in die Wand ab.

Bevorzugt weist dabei der Wandabschnitt an einem dem ersten Ende gegenüberliegenden zweiten Ende eine Einbringkontur mit einer reduzierten Wandstärke der Wandung auf. Die Wandstärke beschreibt die Dicke der Wandung. Durch das Vorsehen einer Einbringkontur kann in vorteilhafter Weise das Einbringen der Befestigungshülse in eine Öffnung erleichtert werden. Dabei kann die Befestigungshülse beim Einbringen in eine Öffnung einer Wand durch die Einbringkontur geführt werden und so die Ausrichtung der Befestigungshülse vereinfacht werden.

Ferner ist es besonders vorteilhaft, wenn an dem ersten Ende des Wandabschnitts ein Innendurchmesser des Wandabschnitts vergrößert ist. Dadurch wird ermöglicht, dass ein öffnungsseitiger Kragenabschnitt einer topfförmigen Installationsdose auf dem Wandabschnitt der Befestigungshülse aufliegen kann, so dass der Kragenabschnitt einer eingeschobenen Installationsdose in Längsrichtung der Befestigungshülse nicht von dem Kragenabschnitt der Befestigungshülse hervorsteht. Dies erleichtert das Verputzen einer in der Wand eingedrehten Befestigungshülse mit einer darin aufgenommenen Installationsdose, da die der Kragenabschnitt der Installationsdose plan mit dem Kragenabschnitt der Befestigungshülse abschließt.

Gemäß einem Aspekt der Erfindung weist der Kragenabschnitt eine Lochung auf. Die Lochung kann konzentrisch kreisförmig oder radial ausgeführt sein. Eine solche Lochung weist mehrere Vorteile auf. Einerseits dienen die Löcher der Reduktion des für die Befestigungshülse notwendigen Materials. Andererseits bietet die durch die Lochung gebildete zur Außenseite gerichtete Struktur den Vorteil, dass der Verputz besser am Kragenabschnitt der Befestigungshülse haftet. Vorzugsweise ist die Oberfläche des Kragenabschnitts aufgeraut. Durch eine aufgeraute Oberfläche kann die Haftung des Verputzes an der Oberfläche des Kragenabschnitts weiter verbessert werden.

In einer bevorzugten Ausführungsform weist die Befestigungshülse wenigstens ein Kraftübertragungsmittel zum Eindrehen der Befestigungshülse in die Wand auf. Durch das Anordnen eines Kraftübertragungsmittels wird in vorteilhafter Weise der Angriff an die Befestigungshülse erleichtert und weiterhin die Kraftübertragung zum Zwecke des Eindrehens der Befestigungshülse in eine Wand verbessert. Ein Kraftübertragungsmittel kann beispielsweise dazu eingerichtet sein mit einem Setzwerkzeug gekoppelt zu werden, um ein Eindrehen der Befestigungshülse zu erleichtern. Ein weiterer Vorteil wird dann erzielt, wenn das Kraftübertragungsmittel mit einer Innenfläche des Wandabschnitts verbunden ist, wobei das Kraftübertragungsmittel sich hin zu einer Längsachse des Wandabschnitts erstreckt und wobei das Kraftübertragungsmittel einen Werkzeugkopplungsabschnitt aufweist, der koaxial zu der Längsachse angeordnet ist. Durch das Anordnen des Kraftübertragungsmittels von der Innenfläche des Wandabschnitts hin zu der Längsachse des Wandabschnitts wird sichergestellt, dass das Kraftübertragungsmittel im Innenraum der Befestigungshülse auch während des Eindrehens der Befestigungshülse in eine Öffnung leicht zugänglich ist. Ferner erlaubt die Anordnung eines Werkzeugkopplungsabschnitts, der koaxial zu der Längsachse der Befestigungshülse angeordnet ist, die Kopplung mit einem Werkzeug, beispielsweise mit einem Innensechskant oder dergleichen, und erleichtert daher das Eindrehen der Befestigungshülse. Des Weiteren kann durch die koaxiale Anordnung des Werkzeugkopplungsabschnitts und der Längsachse der Befestigungshülse eine an dem Werkzeugkopplungsabschnitt anliegende Kraft gleichmäßig und effizient in eine Rotation der Befestigungshülse umgesetzt werden.

Nach einem weiteren Aspekt der Erfindung ist das Kraftübertragungsmittel mit dem Kragenabschnitt verbunden und erstreckt sich parallel zu der Längsachse.

Ein mit dem Kragenabschnitt verbundenes Kraftübertragungsmittel bietet eine einfache Zugänglichkeit und kann so das Eindrehen der Befestigungshülse weiter erleichtern. Vorzugsweise ist das Kraftübertragungsmittel mit dem Kragenabschnitt an einer Außenumfangsfläche des Kragenabschnitts verbunden und erstreckt sich parallel zu der Längsachse. Ein derartig angeordnetes Kraftübertragungsmittel erlaubt einerseits das Einschieben einer Installationsdose in die Befestigungshülse und ermöglicht andererseits das vereinfachte Eindrehen der Befestigungshülse in eine Öffnung einer Wand.

Ferner ist das Kraftübertragungsmittel besonders bevorzugt durch eine Sollbruchstelle entfernbar angebunden. Eine Sollbruchstelle kann beispielsweise durch eine geschwächte Kontur, einen Bereich mit einer verringerten Materialstärke, eine bereichsweise Lochung oder dergleichen gebildet werden. Durch das Vorsehen eines derartig angebundenen Kraftübertragungsmittels wird ermöglicht, zunächst die Befestigungshülse mit Hilfe des Kraftübertragungsmittels in die Öffnung einer Wand einzudrehen und sodann das Kraftübertragungsmittel beispielsweise durch Herausdrehen, Herausbrechen oder dergleichen von der Befestigungshülse zu entfernen.

Die Erfindung wird nachfolgend anhand eines Ausführungsbeispiels und unter Bezugnahme auf die Zeichnungen näher erläutert. Dabei bilden alle beschriebenen und/oder bildlich dargestellten Merkmale für sich oder in beliebiger Kombination den Gegenstand der Erfindung, unabhängig von ihrer Zusammenfassung in den Ansprüchen oder deren Rückbezügen.

Es zeigen schematisch:
- Figur 1: eine perspektivische Ansicht einer erfindungsgemäßen Befestigungshülse 1,
- Figur 2: eine seitliche Ansicht der in Fig. 1 gezeigten Befestigungshülse 1,
- Figur 3: eine perspektivische Ansicht der in Fig. 1 gezeigten Befestigungshülse 1 mit eingeschobener Installationsdose 100,
- Figur 4: eine seitliche Ansicht der in Fig. 3 gezeigten Befestigungshülse 1 mit eingeschobener Installationsdose 100,
- Figur 5: eine Schnittansicht der in Fig. 3 gezeigten Befestigungshülse 1 mit eingeschobener Installationsdose 100,
- Figur 6: eine perspektivische Ansicht einer erfindungsgemäßen Befestigungshülse 1 gemäß einer zweiten Ausführungsform und
- Figur 7: eine perspektivische Ansicht einer erfindungsgemäßen Befestigungshülse 1 gemäß einer dritten Ausführungsform.

Die in den Zeichnungen verwendeten Bezugszeichen und deren Bedeutung sind in der Bezugszeichenliste zusammengefasst aufgelistet. Grundsätzlich sind in den Figuren gleiche Elemente mit gleichen Bezugszeichen versehen.

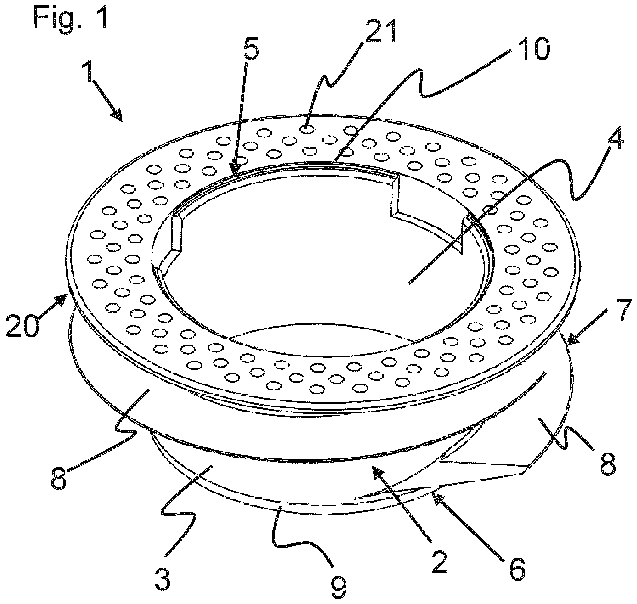

Die in Figur 1 dargestellte Befestigungshülse 1 verfügt über einen hohlzylindrischen Wandabschnitt 2, der durch eine umlaufende Wandung gebildet wird. Der hohlzylindrische Wandabschnitt 2 weist eine auf der Außenseite des Hohlzylinders befindliche Außenfläche 3 und eine auf der Innenseite des Hohlzylinders befindliche Innenfläche 4 auf. Die Innenfläche 4 ist der Längsachse L des hohlzylindrischen Wandabschnitts 2 zugewandt, während die Außenfläche 3 der Längsachse L abgewandt ist. Die zylinderförmige Innenausnehmung des hohlzylindrischen Wandabschnitts 2 hat einen Durchmesser von etwa 68 mm. Dies entspricht dem Außenmaß einer Installationsdose 100 (Unterputzdose bzw.

Hohlwandinstallationsdose) für die Elektroinstallation. Der Außendurchmesser des hohlzylindrischen Wandabschnitts 2 hat einen Durchmesser von etwa 74 mm. Der Wandabschnitt 2 bildet ein erstes Ende 5 und einem dem ersten Ende 5 gegenüberliegendes zweites Ende 6. Die Befestigungshülse 1 besteht aus Kunststoff und wurde im Spritzgussverfahren gefertigt.

An dem ersten Ende 5 des Wandabschnitts 2 erstreckt sich ein Kragenabschnitt 20 radial nach außen. Der Kragenabschnitt 20 bildet einen rechten Winkel zum Wandabschnitt 2. Die Erstreckungsrichtung des Kragenabschnitts 20 weist von der Längsachse L der Befestigungshülse 1 weg. Der Kragenabschnitt 20 bildet eine Lochscheibe mit einer zentralen Ausnehmung. Des Weiteren weist der Kragenabschnitt 20 eine Lochung 21, bestehend aus drei gestaffelten konzentrischen Reihen von umlaufend angeordneten Löchern, auf. Die Löcher sind als Durchgangslöcher ausgeführt.

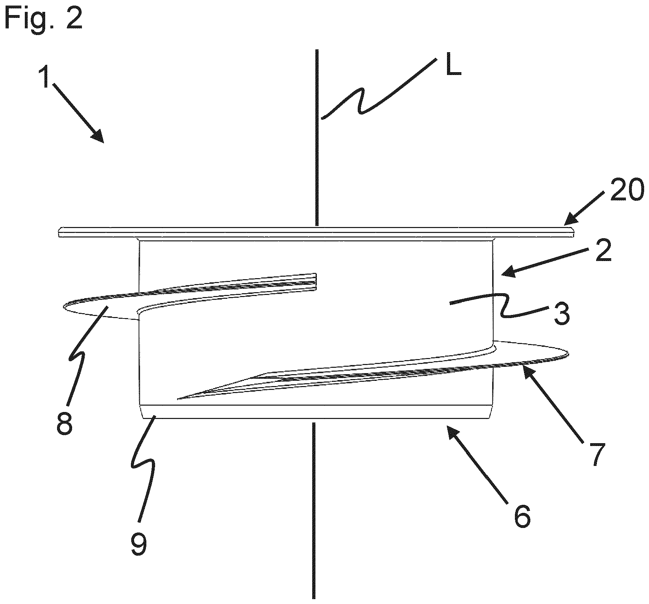

An der Außenfläche 3 des Wandabschnitts 2 ist umlaufend eine gewindeähnliche Profilierung 7 angeordnet. Wie insbesondere aus Figur 2 ersichtlich, erstreckt sich die gewindeähnliche Profilierung 7 von einem Bereich nahe dem zweiten Ende 6 des Wandabschnitts 2 umlaufend in Richtung eines Bereichs nahe dem ersten Ende 5 des Wandabschnitts 2. Die gewindeähnliche Profilierung 7 ist geneigt und beschreibt einen spiralförmigen Pfad um die Außenfläche 3 des Wandabschnitts 2. Die gewindeähnliche Profilierung 7 beginnt in einem Bereich nahe dem zweiten Ende 6 des Wandabschnitts 2 und umläuft den Wandabschnitt 2 spiralförmig etwa ein Mal. Die gewindeähnliche Profilierung 7 wird durch eine Rippe 8 gebildet, die von der Außenfläche 3 des Wandabschnitts 2 vorsteht. Die Rippe 8 weist am dem Wandabschnitt 2 zugewandten Ansatz einen breiten Abschnitt auf. Ausgehend vom Ansatz verjüngt sich die Rippe 8 radial nach außen, d. h. senkrecht von der Längsachse L weg weisend. Die Rippe 8 verjüngt sich kontinuierlich vom Ansatz zum äußeren Ende, d. h. die Breite der Rippe 8 nimmt kontinuierlich ab.

An dem zweiten Ende 6 des Wandabschnitts 2 ist eine Einbringkontur 9 vorgesehen. Die Einbringkontur 9 wird durch eine angeschrägte Außenfläche 3 des Wandabschnitts 2 gebildet. Im Bereich der Einbringkontur 9 verringert sich der Außendurchmesser des Wandabschnitts 2 kontinuierlich. Im Bereich der Einbringkontur 9 ist der Innendurchmesser des Wandabschnitts 2 konstant.

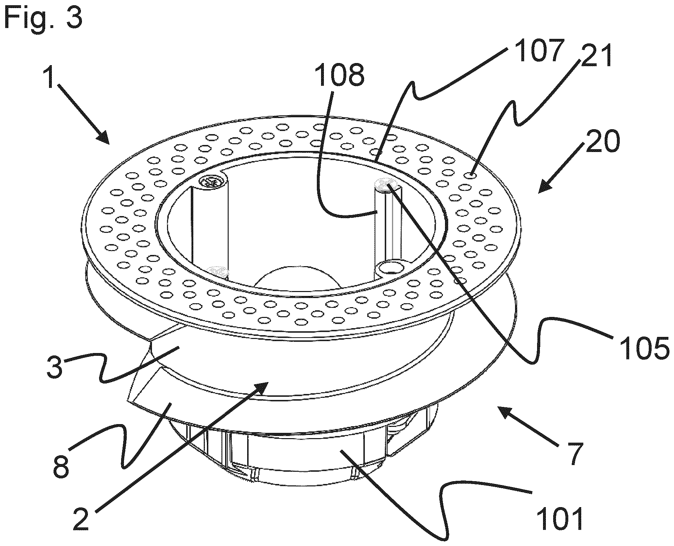

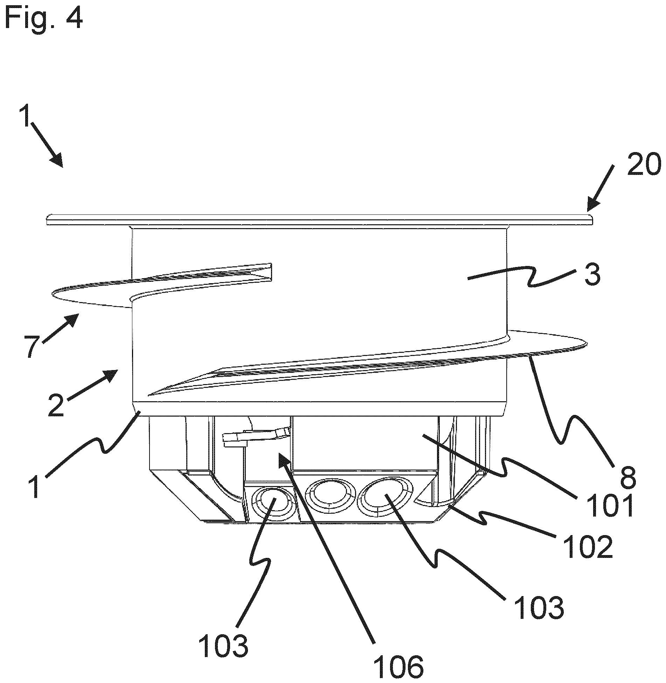

Figur 3 und 4 zeigen eine Befestigungshülse 1 mit einer darin eingeschobenen Installationsdose 100 für die Elektroinstallation. Die Installationsdose 100 weist einen topfförmigen Grundkörper mit einer umlaufenden Wandung 101 und einem Bodenbereich 102 auf. Am dem Bodenbereich 102 abgewandten Ende der topfförmigen Installationsdose 100 ist ein umlaufender Kragenabschnitt 107 angeordnet, der nach außen über die umlaufende Wandung 101 hervorsteht. In einem angeschrägten Bereich der umlaufenden Wandung 101 sind Durchstoßöffnungen 103 vorgesehen, die durch kreisförmige, von geschwächten Linien umgebenen Bereiche gebildet werden. Die Durchstoßöffnungen 103 können mit einem Werkzeug herausgetrennt oder mit einem Kabel durchstoßen werden. Die Installationsdose 100 verfügt über Rastelemente 104 mit einer Arretierschraube 105 und einer damit gekoppelten Halteklammer 106. Die Arretierschraube 105 erstreckt sich durch einen im Innenraum der topfförmigen Installationsdose 100 angeordneten Kanal 108 zur Außenseite der topfförmigen Installationsdose 100 und koppelt dort an die Halteklammer 106. Die Halteklammer 106 ist über ein Innengewinde an ein Außengewinde der Arretierschraube 105 gekoppelt. Die Installationsdose 100 besteht aus Kunststoff und wurde im Spritzgussverfahren gefertigt.

Die Installationsdose 100 ist in die Befestigungshülse 1 in einer Einschubrichtung eingeschoben. Die Einschubrichtung weist entlang der Längsachse L von dem ersten Ende 5 zu dem zweiten Ende 6 des Wandabschnitts 2. Der topfförmige Körper der Installationsdose 100 ist im hohlzylindrischen Innenraum des Wandabschnitts 2 aufgenommen. Die umlaufende Wandung 101, die Durchstoßöffnungen 103 und der Bodenbereich 102 der Installationsdose 100 treten an dem zweiten Ende 6 des Wandabschnitts 2 hervor.

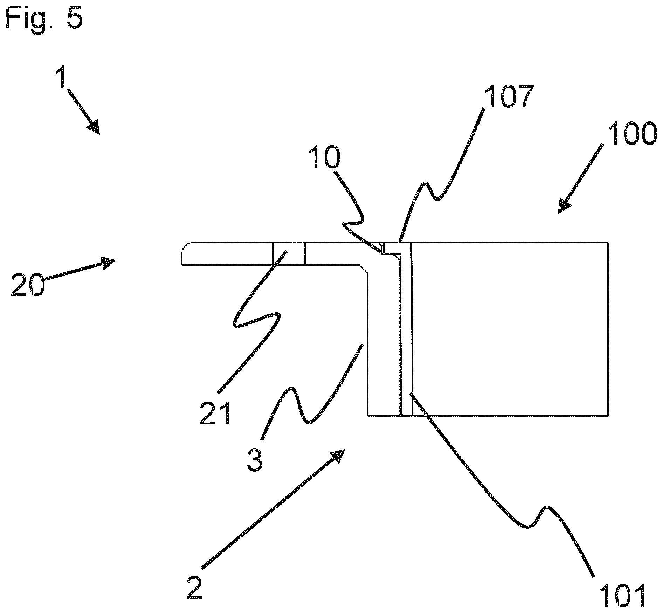

Mit Verweis auf Figur 1 und 5 weist der Wandabschnitt 2 an dem ersten Ende 5 einen Bereich mit einem vergrößerten Innendurchmesser 10 auf. Der Bereich mit vergrößertem Innendurchmesser 10 ist als eine stufenförmiger Absatz am ersten Ende 5 ausgebildet. Im Bereich mit vergrößertem Innendurchmesser 10 ist der Innendurchmesser umlaufend gleichmäßig vergrößert. Der Bereich mit vergrößertem Innendurchmesser 10 weist einen größeren Innendurchmesser als der restliche Bereich des Wandabschnitts 2 auf. Der Bereich mit vergrößertem Innendurchmesser 10 weist in Längsrichtung, d. h. entlang der Längsachse L, eine Höhe auf, die der Dicke des Kragenabschnitts 107 der Installationsdose 100 entspricht. Der Außendurchmesser des Kragenabschnitts 107 entspricht dem Innendurchmesser des Wandabschnitts 2 im Bereich mit vergrößerten Innendurchmesser 10. Der Außendurchmesser der umlaufenden Wandung 101 der Installationsdose 100 entspricht dem Innendurchmesser des Wandabschnitts 2 der Befestigungshülse 1 außerhalb des Bereichs mit vergrößertem Innendurchmesser 10.

In der Darstellung der Figuren 3 bis 5 ist eine Installationsdose in die Befestigungshülse 1 eingeschoben. Der Kragenabschnitt 107 liegt auf dem auf dem Bereich mit vergrößertem Innendurchmesser 10 auf. Die Oberfläche des Kragenabschnitts 107 der Installationsdose 100 schließt plan mit der Oberfläche des Kragenabschnitts 20 der Befestigungshülse 1 ab. Durch das Aufliegen des Kragenabschnitts 107 auf dem Bereich mit vergrößertem Innendurchmesser 10 wird die Einschubtiefe der Installationsdose 100 begrenzt und ein Endanschlag gebildet. Die Installationsdose 100 ist mittels der Halteklammern 106 der Rastelemente 105 am zweiten Ende 6 des Wandabschnitts 2 arretiert. Die Halteklammern 106 greifen an das zweite Ende 6 des Wandabschnitts 2 an und verhindern eine Bewegung der Installationsdose 100 entgegen der Einschubrichtung. Die Halteklammern 106 werden durch Rotation der Arretierschrauben 105 entlang der Arretierschrauben 105 translatiert und damit in Anlage an das zweite Ende 6 des Wandabschnitts 2 gebracht. Im Zusammenwirken mit der Auflage des Kragenabschnitts 107 auf dem Bereich mit vergrößertem Innendurchmesser 10 wird durch die Halteklammern 106 eine Klemmwirkung entfaltet.

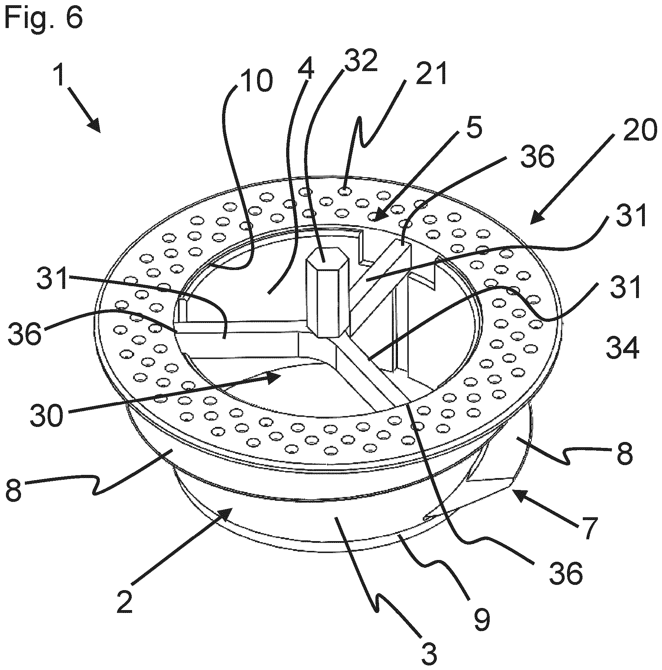

Figur 6 zeigt eine zweite Ausführungsform einer erfindungsgemäßen Befestigungshülse 1. Die Befestigungshülse 1 gemäß der zweiten Ausführungsform gleicht dem Aufbau der Befestigungshülse 1 gemäß der ersten Ausführungsform, ist darüber hinaus aber um ein Kraftübertragungsmittel 30 erweitert. Das Kraftübertragungsmittel 30 weist drei Verbindungsabschnitte 31 und einen Werkzeugkopplungsabschnitt 32 auf. Die drei Verbindungsabschnitte 31 laufen im auf der Längsachse L liegenden Mittelpunkt des hohlzylindrischen Wandabschnitts 2 zusammen und erstrecken sich im Abstand von jeweils etwa 120° in Richtung der Innenfläche 4 des Wandabschnitts 2. Die Verbindungsabschnitte 31 sind in einem Bereich der Innenfläche 4 nahe dem ersten Ende 5 mit der Innenfläche 4 verbunden. Die Verbindung der Verbindungsabschnitte 31 zu der Innenfläche 4 ist über eine Kontur mit geschwächter Materialstärke hergestellt, die jeweils eine Sollbruchstelle 36 ausbildet. Von den zentral zusammenlaufenden Verbindungsabschnitten 31 erstreckt sich entlang der Längsachse L in einer von dem zweiten Ende 6 zu dem ersten Ende 5 verlaufenden Richtung ein Werkzeugkopplungsabschnitt 32. Der Werkzeugkopplungsabschnitt 32 ist koaxial zu der Längsachse L angeordnet. Der Werkzeugkopplungsabschnitt 32 ist als Außensechskant ausgebildet und dazu eingerichtet an ein Werkzeug mit einem Innensechskant lösbar gekoppelt zu werden.

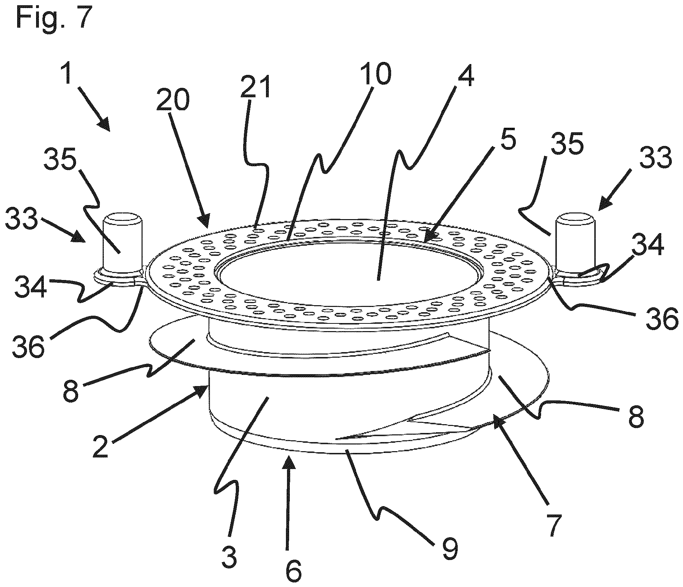

Figur 7 zeigt eine dritte Ausführungsform einer erfindungsgemäßen Befestigungshülse 1. Die Befestigungshülse 1 gemäß der dritten Ausführungsform gleicht dem Aufbau der Befestigungshülse 1 gemäß der ersten Ausführungsform, ist darüber hinaus aber ebenfalls um ein Kraftübertragungsmittel 33 erweitert. Das Kraftübertragungsmittel 33 ist am umlaufenden Außenrand des Kragenabschnitts 20 angeordnet und an den Kragenabschnitt 20 über eine Sollbruchstelle 36 angebunden. Die Sollbruchstelle 36 ist durch eine Kontur mit geschwächter Materialstärke ausgebildet. Das Kraftübertragungsmittel 33 wird durch eine sich radial nach außen erstreckende Basis 34 und einen sich von der Basis parallel zu der Längsachse L in einer von dem zweiten Ende 6 zu dem ersten Ende 5 verlaufenden Richtung erstreckenden zylindrischen Angriffsabschnitt 35 gebildet. Dabei sind zwei Kraftübertragungsmittel 33 so angeordnet, dass diese an gegenüberliegenden Seiten des Kragenabschnitts 20 angebunden sind.

Mit Bezug auf die in den Figuren 1 bis 5 gezeigte erste Ausführungsform der erfindungsgemäßen Befestigungshülse 1 wird nun das Eindrehen der Befestigungshülse in eine Dämmschicht einer Wand, wie zum Beispiel die Fassadendämmung einer Hauswand, beschrieben. Zunächst wird in die Dämmschicht eine Öffnung mit einem Durchmesser von 74 mm eingebracht. Eine derartige Öffnung kann als Sackloch oder Durchgangsloch mittels eines Bohrwerkzeugs erzeugt werden. Die Befestigungshülse 1 wird so an der Öffnung angeordnet, dass die Längsachse L etwa deckungsgleich mit dem Mittelpunkt der Öffnung ist. Die Einbringkontur 9 der Befestigungshülse 1 wird nun in die Öffnung eingeführt und zentriert die Befestigungshülse 1 in der Öffnung. Die Befestigungshülse 1 wird so weit in die Öffnung eingeschoben, bis der dem zweiten Ende 6 nächstliegende Teil der Rippe 8 die die Öffnung umgebende Oberfläche der Dämmschicht berührt. Durch eine anschließende Rotation der der Befestigungshülse 1 im Uhrzeigersinn, wird die Rippe 8 in Eingriff mit der Dämmschicht gebracht. Durch weitere Rotation schneidet die Rippe 8 in die Oberfläche der Dämmschicht ein. Das Zusammenwirken der Rotation der Befestigungshülse 1 und der Gewindesteigung der als Rippe 8 ausgebildeten gewindeähnlichen Profilierung 7 führt zu einer Translation der Befestigungshülse 1 in die Öffnung hinein. Diese Translation ist abschlossen, wenn die Unterseite des Kragenabschnitts 20 auf der Oberfläche der Dämmschicht aufliegt.

Mit Bezug auf die in Figur 6 gezeigte zweite Ausführungsform erfolgt das Eindrehen in eine Dämmschicht analog zu dem voranstehend beschrieben Ablauf. Einzig das Eindrehen erfolgt vorzugsweise über das Koppeln eines dazu eingerichteten Werkzeugs mit dem Werkzeugkopplungsabschnitt 32 des Kraftübertragungsmittels 30. Durch eine Rotation des Werkzeugkopplungsabschnitts 32 um die Längsachse L der Befestigungshülse 1 wird die Befestigungshülse 1 somit kontinuierlich in die Öffnung der Dämmschicht eingedreht bis der Kragenabschnitt 20 auf der Oberfläche der Dämmschicht aufliegt. Nach Beendigung des Eindrehvorgangs kann das Kraftübertragungsmittel 30 durch Brechen der Sollbruchstellen 36 herausgetrennt werden.

Im Hinblick auf die in Figur 7 gezeigte dritte Ausführungsform der Befestigungshülse 1 erfolgt der Eindrehvorgang ebenfalls analog zu der ersten Ausführungsform der Befestigungshülse 1. Dabei wird die Rotation der Befestigungshülse 1 vorzugsweise durch Angriff an die Angriffsabschnitte 35 der Kraftübertragungsmittel 33 vermittelt. Nach Beendigung des Eindrehvorgangs können die Kraftübertragungsmittel 33 durch Brechen der Sollbruchstellen 36 von der Befestigungshülse 1 abgetrennt werden.

### Bezugszeichen

- 1: Befestigungshülse
- 2: Wandabschnitt
- 3: Außenfläche des Wandabschnitts
- 4: Innenfläche des Wandabschnitts
- 5: erstes Ende des Wandabschnitts
- 6: zweites Ende des Wandabschnitts
- 7: gewindeähnliche Profilierung
- 8: Rippe
- 9: Einbringkontur
- 10: Bereich mit vergrößertem Innendurchmesser
- 20: Kragenabschnitt
- 21: Lochung
- 30, 33: Kraftübertragungsmittel
- 31: Verbindungsabschnitt
- 32: Werkzeugkopplungsabschnitt
- 34: Basis
- 35: Angriffsabschnitt
- 36: Sollbruchstelle
- 100: Installationsdose
- 101: Umlaufende Wandung der Installationsdose
- 102: Bodenbereich der Installationsdose
- 103: Durchstoßöffnungen der Installationsdose
- 104: Rastelemente der Installationsdose
- 105: Arretierschraube
- 106: Halteklammer des Rastelements der Installationsdose
- 107: Kragenabschnitt der Installationsdose
- L: Längsachse der Befestigungshülse

## Patentansprüche

1. Befestigungshülse (1) zum Einschrauben in eine Wand, insbesondere in eine Dämmschicht, sowie zur Aufnahme einer Installationsdose (100) für eine Elektroinstallation, wobei die Befestigungshülse (1) einen hohlzylindrischen Wandabschnitt (2), der durch eine Wandung gebildet wird, und einen Kragenabschnitt (20), der sich an einem ersten Ende (5) des Wandabschnitts (2) radial nach außen erstreckt, aufweist,
**dadurch gekennzeichnet, dass** auf einer Außenfläche (3) des Wandabschnitts (2) zumindest bereichsweise eine gewindeähnliche Profilierung (7) vorgesehen ist.

2. Befestigungshülse (1) gemäß Anspruch 1, **dadurch gekennzeichnet, dass** die gewindeähnliche Profilierung (7) durch eine von der Außenfläche (3) des Wandabschnitts (2) vorstehende Rippe (8) gebildet wird.

3. Befestigungshülse (1) gemäß Anspruch 2, **dadurch gekennzeichnet, dass** die Rippe (8) sich ausgehend von der Außenfläche (3) des Wandabschnitts (2) verjüngt.

4. Befestigungshülse (1) gemäß einem der vorhergehenden Ansprüche, **dadurch gekennzeichnet, dass** der Wandabschnitt (2) an einem dem ersten Ende (5) gegenüberliegenden zweiten Ende (6) eine Einbringkontur (9) mit einer reduzierten Wandstärke der Wandung aufweist.

5. Befestigungshülse (1) gemäß einem der vorhergehenden Ansprüche, **dadurch gekennzeichnet, dass** an dem ersten Ende (5) des Wandabschnitts (2) ein Innendurchmesser des Wandabschnitts (2) vergrößert ist.

6. Befestigungshülse (1) gemäß einem der vorhergehenden Ansprüche, **dadurch gekennzeichnet, dass** der Kragenabschnitt (20) eine Lochung (21) aufweist.

7. Befestigungshülse (1) gemäß einem der vorhergehenden Ansprüche, **dadurch gekennzeichnet, dass** die Befestigungshülse (1) wenigstens ein Kraftübertragungsmittel (30, 33) zum Eindrehen der Befestigungshülse (1) in die Wand aufweist.

8. Befestigungshülse (1) gemäß Anspruch 7, **dadurch gekennzeichnet, dass** das Kraftübertragungsmittel (30) mit einer Innenfläche (4) des Wandabschnitts (2) verbunden ist, wobei das Kraftübertragungsmittel (30) sich hin zu einer Längsachse (L) des Wandabschnitts (2) erstreckt und wobei das Kraftübertragungsmittel (30) einen Werkzeugkopplungsabschnitt (32) aufweist, der koaxial zu der Längsachse (L) angeordnet ist.

9. Befestigungshülse (1) gemäß Anspruch 7, **dadurch gekennzeichnet, dass** das Kraftübertragungsmittel (33) mit dem Kragenabschnitt (20) verbunden ist und sich parallel zu der Längsachse (L) erstreckt.

10. Befestigungshülse (1) gemäß einem der Ansprüche 7 bis 9, **dadurch gekennzeichnet, dass** das Kraftübertragungsmittel (30, 33) durch eine Sollbruchstelle (34) entfernbar angebunden ist.
